# EUROPEAN PATENT SPECIFICATION

(11) **EP 1 953 001 B1**
(45) Date of publication and mention of the grant of the patent: **19.05.2010**
(21) Application number: 07101578.8
(22) Date of filing: 01.02.2007
(51) Int. Cl.: B42B 2/02, F16H 25/16

(54) **Cam system for bookbinding sewing machines with different biasing of a single follower**
Nockensystem für Buchbinde-Heftmaschinen mit unterschiedlicher Ausrichtung eines einzelnen Stößels
Système à came pour machines à relier avec inclinaison différente d'un levier entraîné unique

(43) Date of publication of application: 06.08.2008
(73) Proprietor: MECCANOTECNICA S.p.A., I-24025 Gazzaniga - Bergamo (IT)
(72) Inventor: Fustinoni, Roberto, I-25036, PALAZZOLO (IT)
(74) Representative: Pezzoli, Ennio

(56) References cited:
- GB-A- 789 111
- GB-A- 1 225 679

## Description

The present invention relates to the bookbinding field. More specifically, the present invention relates to cam systems for use in bookbinding sewing machines.

Bookbinding sewing machines are commonly used to make sewn books. For this purpose, blocks of signatures are sewn by means of continuous threads; the threads are cut after sewing a last signature of each block, so as to separate it from a next one. The blocks of signatures are then distributed to further machines, which complete the production of the corresponding books.

The above-mentioned sewing process is implemented by means of specific members of the sewing machine. For example, the sewing machine is provided with needles and hook needles, or crochets (for forming the desired stitches), and thread carriers (for conveying the threads from the needles to adjacent hook needles); moreover, the sewing machine also includes cutters (for severing the threads when each block of signatures is complete), and possibly separators (for tightening the cut threads).

Generally, at least some of these members may work in different modes during operation of the sewing machine. For example, the same operations are repeated by the needles, the hook needles and the thread carriers in every sewing cycle - when a current signature must be sewn to a preceding one of the same block. In this phase, the cutters and the separators are instead inactive. Conversely, different operations are performed during a separation cycle - after sewing the last signature of each block. Typically, in this phase the hook needles do not rotate - so as to release the threads when the hook needles enter the first signature of the next block; in any case, it is necessary to actuate the cutters and the separators (if available). Furthermore, the thread carriers always convey the threads in the same direction when the sewing machine uses a normal stitch sewing technique; conversely, in a stagger stitch sewing technique the thread carriers convey the threads alternately in opposite directions.

The above-described members of the sewing machine are generally driven by cam systems - so as to provide a smooth and repeatable motion, which is always accurately timed with an operative speed of the sewing machine. Therefore, in order to implement the different working modes of each driven member, it is necessary to change its corresponding motion law.

For this purpose, several solutions are known in the art for a generic cam system. For example, it would be possible to change a profile of its cam; moreover, it would be possible to move its follower to different cams or to different positions of a three-dimensional cam. However, the solutions based on the change of the cam profile or of the cam do not support the high speed required in the sewing machines - wherein the motion law of the follower may change even for a single operative cycle of the sewing machine. On the other hand, the three-dimensional cams are relatively complex and expensive.

The closest prior art is disclosed in document GB-A-1,225,679, wherein a cam system suitable for a bookbinding machine, with the same features of the preamble of claim 1, is disclosed.

A solution commonly used for driving the hook needles and the cutters/separators in the sewing machines is instead based on two cams with corresponding followers. The profiles of the cams are partially coincident (i.e., they have a common section); the followers consist of two levers, which pivot about a common fulcrum (with each lever that is biased against its cam by a corresponding spring). Normally, the member is driven by the follower associated with the cam having the lower pitch (with respect to a base circle of the cams); the other follower is instead idle. When it is necessary to change the working mode of the driven member, the two levers are fastened to each other; in this way, the member is now driven by the follower associated with the cam having the higher pitch.

The operation of fastening/unfastened the two levers must be repeated continually during operation of the sewing machine (to switch between the sewing cycle and the separation cycle). For this purpose, there is generally used a pneumatic piston that slides in two through-holes formed in the levers (which through-holes are coaxial when the levers follow the common section of their cam profiles).

However, the clearance between the piston and the through-holes must be very low (to ensure the correct operation of the cam system). This requires the use of sophisticated processes for the manufacturing of the cams and the piston; in addition, the operations for mounting the piston are quite complex. As a result, the cost of the cam system (and then of the whole sewing machine) is significantly increased. Moreover, the piston may easily seize up (for example, when any dirty enters the through-holes); this causes a stop of the sewing machine for a relatively long period (with a deleterious effect on its yield). In any case, the control of the piston is quite problematic. Indeed, the piston can slide freely in the through-holes only when they are perfectly aligned; therefore, the operation of fastening/unfastening the levers must start and must complete when the levers follow the common section of their cam profiles. In order to achieve this result, it is then necessary to time the actuation of the piston with high accuracy (taking into account any delay in its motion).

A different solution is instead used to drive the thread carriers alternatively in the normal stitch sewing technique or in the stagger stitch sewing technique. For this purpose, the sewing machine typically includes two independent cam systems (each one with a follower and a pair of matching cams mounted on a corresponding shaft); the thread carriers are then coupled with the follower of the cam system implementing the desired sewing technique - while the other follower is left idle. However, the operation of coupling the thread carriers with the selected cam system must be performed manually during a configuration of the sewing machine (when it is not working).

In its general terms, the present invention is based on the idea of using different biasing of a single follower.

Particularly, the present invention provides a solution as set out in the independent claims. Advantageous embodiments of the invention are described in the dependent claims.

More specifically, an aspect of the invention proposes a cam system for use in a bookbinding sewing machine. The cam system includes a follower for driving a member of the sewing machine (or more). Control means is provided for selectively causing the follower to follow a first motion law or a second motion law; the follower drives the member in a first mode or in a second mode when following the first motion law or the second motion law, respectively. The control means includes a first cam and first biasing means; the first biasing means is adapted to bias the follower in a first direction, so as to couple the follower with the first cam (with the follower that follows the first motion law when it is coupled with the first cam). The control means further includes second biasing means; the second biasing means is adapted to bias the follower in a second direction, so as to decouple the follower from the first cam (with the follower that follows the second motion law when it is decoupled from the first cam). Switching means is provided for selectively enabling one of the first biasing means and the second biasing means.

In an embodiment of the invention, the two motion laws include a matching section- with the enabled biasing means that is switched when the follower substantially follows the matching section.

Preferably, the follower is biased by means of a piston (which may apply it two opposed forces alternatively).

A suggested implementation of the proposed solution includes a second cam (with the second biasing means that couples the follower with the second cam to have it follow the second motion law).

In an embodiment of the invention, the follower has two contact elements for cooperating alternatively with the corresponding cams (having active surfaces both facing inwardly or outwardly).

For example, the follower includes a lever (with the two contact elements that are arranged at opposite sides of a line passing through a cam center and a lever fulcrum).

In a different embodiment of the invention, the follower has a single contact element for cooperating alternatively with a cam having an active surface facing outwardly or with another cam having an active surface facing inwardly.

Another implementation of the proposed solution uses the second biasing means to maintain the follower substantially stationary (without any additional cam).

A further aspect of the invention proposes a bookbinding sewing machine including one or more of those cam systems.

Another aspect of the invention proposes a corresponding sewing method.

The invention itself, as well as further features and the advantages thereof, will be best understood with reference to the following detailed description, given purely by way of a non-restrictive indication, to be read in conjunction with the accompanying drawings. In this respect, it is expressly intended that the figures are not necessary drawn to scale and that, unless otherwise indicated, they are merely intended to conceptually illustrate the structures and procedures described herein. Particularly:
Figure 1 shows a particular of a sewing machine, in which the solution according to an embodiment of the invention can be used;
Figures 2a-2c are illustrative pitch diagrams relating to cam systems driving different members of the sewing machine;
Figures 3a-3c provide a schematic representation of a cam system according to an embodiment of the invention in different operative conditions;
Figures 4a-4c provide a schematic representation of a cam system according to another embodiment of the invention in different operative conditions; and
Figures 5a-5c provide a schematic representation of a cam system according to a further embodiment of the invention in different operative conditions.

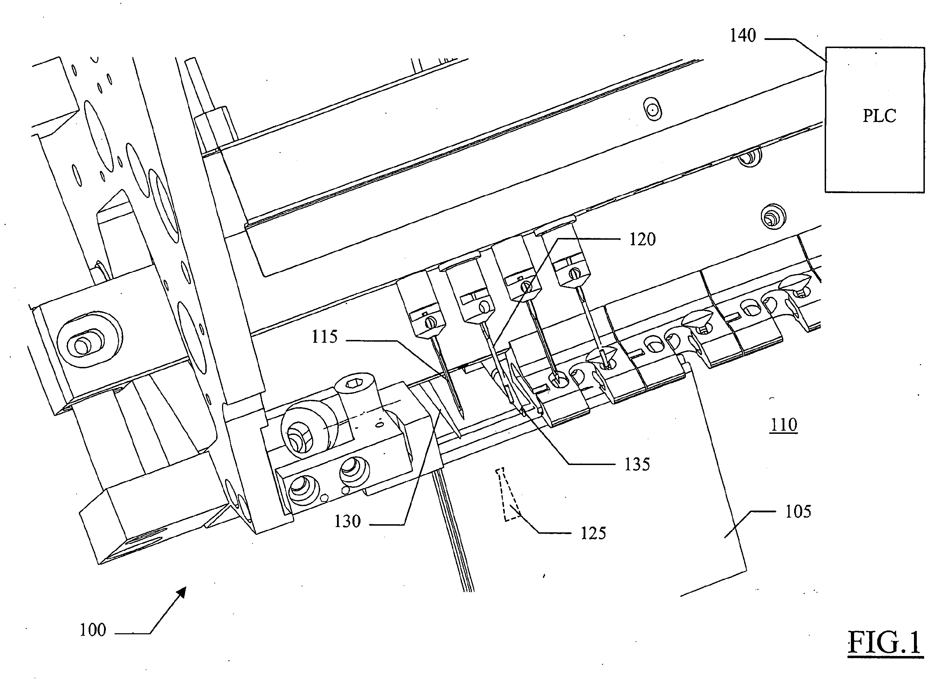

With reference now to Figure 1, a part of a bookbinding sewing machine 100 is illustrated; particularly, the figure details a sewing station thereof in a partially cut away view. The sewing machine 100 is used to sew blocks of signatures together; each signature consists of a large printed sheet, which is folded one or more times (so as to define the pages of a corresponding book). The signatures are opened in the middle and then conveyed to the sewing station in succession (by means of a fixed saddle, not shown in the figure). Each current signature to be sewn (denoted with 105) is placed astride a movable saddle 110 (lowered so as to be aligned with the fixed saddle). The movable saddle 110 is then closed (to a raised position as in the figure), and the current signature 105 is sewn to a preceding one of the same block by means of continuous threads (not shown in the figure). Once a last signature of the block has been sewn, the threads are cut. The block of signatures is then conveyed to a holder (not shown in the figure), in order to be supplied to further machines that complete the production of the corresponding book. Operation of the sewing machine 100 is managed by means of a programmable logic controller (PLC), which is schematically represented in the figure by means of a box 140.

More specifically, the sewing station is provided with multiple sewing units each one including a needle 115 and a hook needle 120. The needles 115 and the hook needles 120 cooperate to form interlocked stitches bridging between adjacent signatures of the block. When the sewing machine 100 is configured to use a normal stitch sewing technique, each needle 115 always cooperates with the same adjacent hook needle 120 (for example, on its right); conversely, in a stagger stitch sewing technique each needle 115 alternately cooperates with the following hook needle 120 (on its right) and with the preceding hook needle 120 (on its left). A thread carrier 125 (shown in dashed lines in the figure) is provided for each needle 115 inside the movable saddle 110; the thread carrier 125 consists of a gripper, which is used to convey the thread from the needle 115 to the desired adjacent hook needle 120.

Moreover, a cutter 130 for each needle 115 - for example, consisting of a blade - is used to sever the corresponding thread (when each block of signatures is complete). Preferably, the sewing machine 100 also includes a separator 135 for each hook needle 120, which separator 135 is used to tighten the seam of the last signature of the block; for example, as described in EP-A-0295220, the separator 135 consists of a hook that picks up a loop of the thread being held by the corresponding hook needle 120, so as to pull the thread until the loop is unraveled.

During each sewing cycle (when the current signature 105 must be sewn to the preceding one of the same block), the needles 115 and the hook needles 120 are lowered; beforehand, however, the hook needles 120 rotate by 180°, so as to maintain a freshly formed loop of the thread wound around them. Each thread carrier 125 then grips the thread conveyed inside the current signature 105 by the corresponding needle 115, and pulls it towards the adjacent hook needle 120 (which extracts the thread from the current signature 105 so as to form a new loop concatenated with the previous one). When the sewing machine 100 uses the normal stitch sewing technique, the thread carriers 125 always convey the threads rightwards; conversely, when the sewing machine 100 uses the stagger stitch sewing technique, the thread carriers 125 alternately convey the threads rightwards and leftwards.

A separation cycle is instead performed when the last signature of each block has been sewn (typically, after a blind stitch - without any signature - to increase the compactness of the block of signatures). In this case, the hook needles 120 do not rotate (so that the corresponding loops are released when the hook needles 120 enter the first signature of the next block). Moreover, each cutter 130 is brought close to the corresponding needle 115; in this way, the thread associated with the needle 115 is tightened on the cutter 130 and severed (as the block of signatures moves away from the needle 115). At the same time, each separator 135 is likewise brought close to the corresponding hook needle 120 (so as to unravel the loop of the thread being held by it).

The above-described members of the sewing machine 100 - i.e., the needles 115, the hook needles 120, the thread carriers 125, the cutters 130 and the separators 135 - are generally driven by cam systems (not shown in the figure). As it is well known, a cam system is a mechanism that is used to generate a desired motion law by means of the contact between surfaces with prescribed shapes. The cam system is formed by a cam, which consists of a rotating element having an active surface defining its profile. A follower is biased against the cam so as to interfere with its active surface; in this way, the follower is forced to follow the motion law corresponding to the cam profile. The follower then drives the respective member according to its motion law.

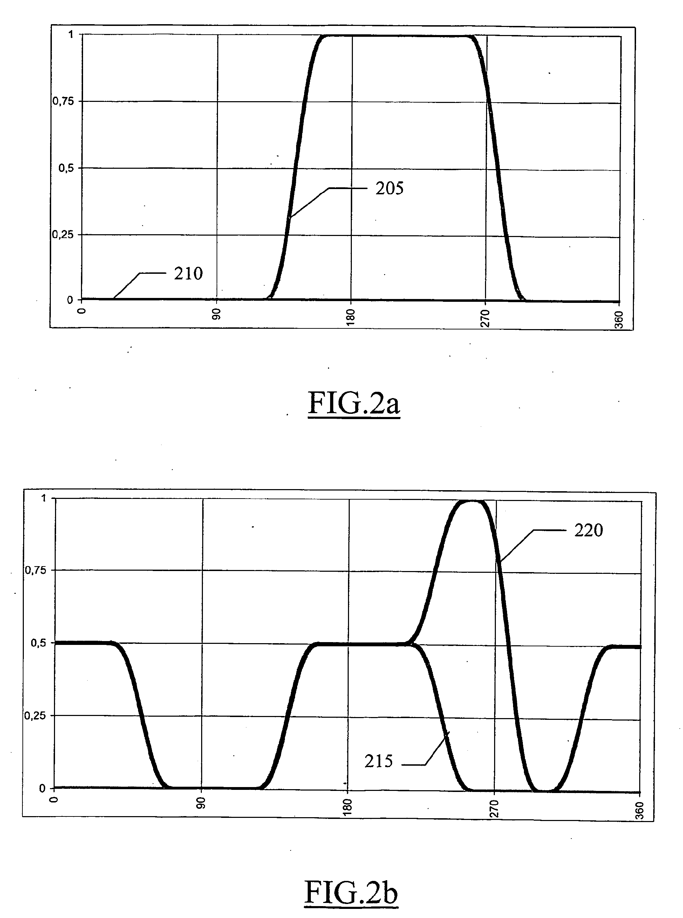

Exemplary motion laws of the cam systems required to control the driven members in the different working modes mentioned above are illustrated in Figures 2a-2c. Particularly, each figure provides a pitch diagram that plots the radial position of the follower (in normalized values, from 0 to 1) against the angular position of the cam profile (from 0° to 360°); the radial position of the follower is represented by its displacement with respect to a base circle (consisting of the smallest circle tangent to the cam profile).

More in detail, Figure 2a illustrates the motion law of the follower for a mechanism being used to rotate the hook needles. As can be seen, during each sewing cycle the follower has a motion law that traces a pitch curve 205; in this case, the pitch is different from zero only for a portion of the pitch curve 205, between the angular positions 120° and 300° - when the hook needles rotate. The motion law of the follower during each separation cycle instead traces a pitch curve 210; in this case, the pitch is always zero (since the hook needles do not rotate).

Likewise, Figure 2b illustrates the motion law of the follower for the separators and the cutters. As can be seen, during each sewing cycle the follower has a motion law that traces a pitch curve 215 (with a positive pitch different from zero only between the angular positions 120° and 260°). The motion law of the follower during each separation cycle instead traces a pitch curve 220; the pitch curve 220 corresponds to the pitch curve 215 apart from some portions with a higher pitch (at the angular positions 0°-75° and 210°-360°) - when the separators and the cutters are actuated.

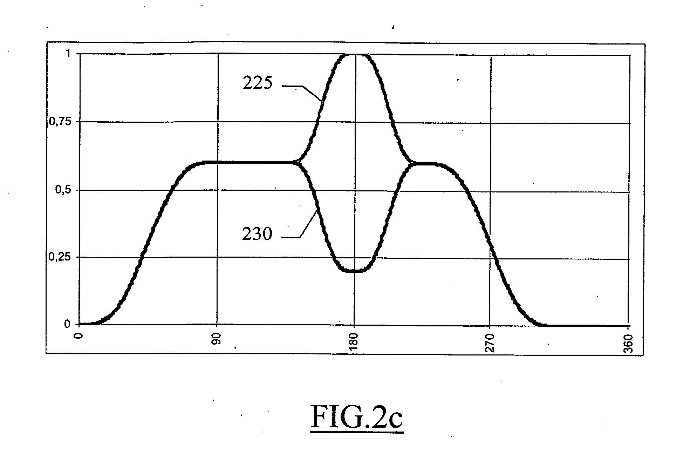

At the end, Figure 2c illustrates the motion law of the follower for the thread carriers. As can be seen, in the normal stitch sewing technique the follower has a motion law that traces a pitch curve 225, while in the stagger stitch sewing technique the follower has a motion law that traces a pitch curve 230. The pitch curves 225 and 230 differ in a portion (between the angular positions 135° and 225°), wherein the pitch curve 225 features an increased pitch and the pitch curve 230 features a reduced pitch - to invert the motion of the thread carriers.

In the solution according to an embodiment of the present invention, as described in detail in the following, the cam system used to control each one of those driven members includes a single follower. The follower may be biased selectively in different directions, so as to follow corresponding motion laws (for example, because of its interference with different cams); therefore, the follower will drive the corresponding member in the working mode defined by the motion law of the selected biasing.

The proposed solution strongly simplifies the structure of the cam system. This allows using less sophisticated processes for its manufacturing; in addition, the mounting of the cam system is facilitated. As a result, the cost of the cam system (and then of the whole sewing machine) is significantly reduced. Moreover, the devised structure is very reliable; this reduces any stops of the sewing machine (thereby increasing its yield). In any case, the control of the cam system is now very simple (since it is enough to invert the biasing of the follower to switch between its different motion laws). Moreover, this operation may be performed without any problem when the sewing machine is working.

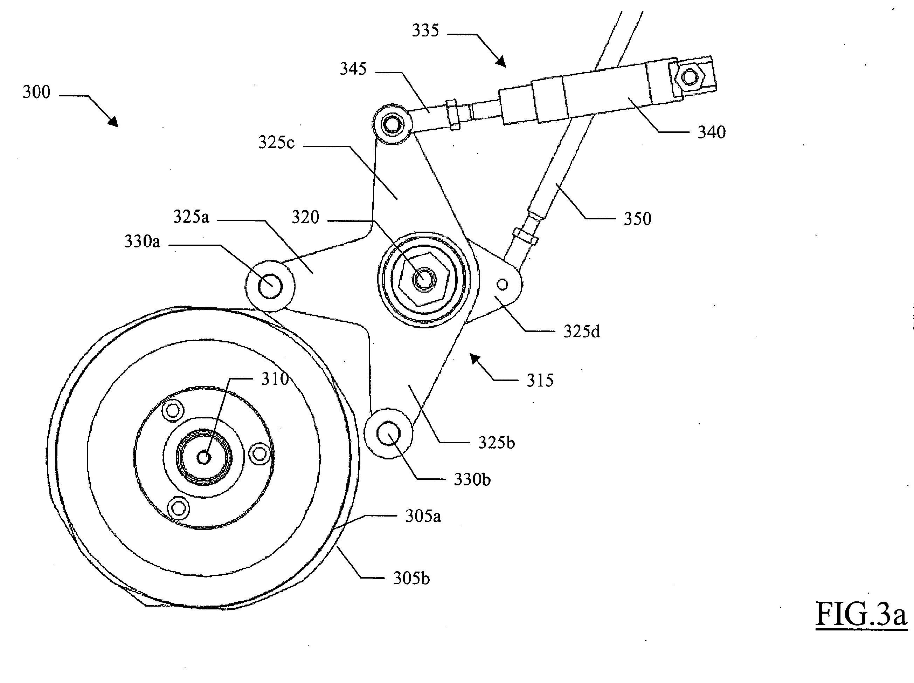

A proposed implementation of the above-mentioned solution is illustrated in Figures 3a-3c. Particularly, Figure 3a shows a cam system 300 that may be used to control the separators and the cutters.

The cam system 300 includes two cams 305a and 305b. Each cam 305a,305b consists of a disc, with a lateral surface that defines the corresponding profile (hereinafter, the cams and their profiles will be denoted with the same references for the sake of simplicity). Both the cam 305a and the cam 305b rotate about a common shaft 310; in this way, the cam profiles 305a and 305b are concentric - with a common center defined by the shaft 310.

The cam system 300 further includes a follower 315; the follower 315 consists of a lever, which pivots about a pin 320 defining its fulcrum. The follower 315 is cross-like shaped, with four arms 325a, 325b, 325c and 325d extending radially from the pin 325. Particularly, the arms 325a,325b face the cams 305a,305b; the arms 325a and 325b are symmetric with respect to a line passing through the center of the cams 305a,305b (i.e., the shaft 310) and the fulcrum of the follower 315 (i.e., the pin 320). The other arms 325c,325d instead extend away from the cams 305a,305b. The arm 325a ends with a roller 330a for cooperating with the cam 305a, and the arm 325b ends with a roller 330b for cooperating with the cam 305b. A pneumatic piston 335 is used to bias the follower 315. The piston 335 consists of a cylinder 340, which is fastened to a frame of the sewing machine (not shown in the figure); a stem 345 - sliding in the cylinder 340 - is hinged to a free end of the arm 325c. Finally, a tie rod mechanism 350 is used to drive the corresponding member (not shown in the figure) according to the motion law of the follower 315; for this purpose, the tie rod mechanism 350 is coupled with a free end of the arm 325d.

In the operative condition of the cam system 300 shown in the figure, the stem 345 is extracted from the cylinder 340. In this way, the piston 335 applies a force to the follower 315 that biases it counter-clockwise. As a consequence, the roller 330a is pushed against the cam 305a so as to interfere with its active surface; therefore, the follower 315 is caused to follow the motion law corresponding to the cam profile 305a (thereby driving the corresponding member accordingly). At the same time, the roller 330b is moved away from the cam 305b (so that the roller 330b is decoupled from its active surface); therefore, the roller 330b does not interfere with the motion of the follower 315.

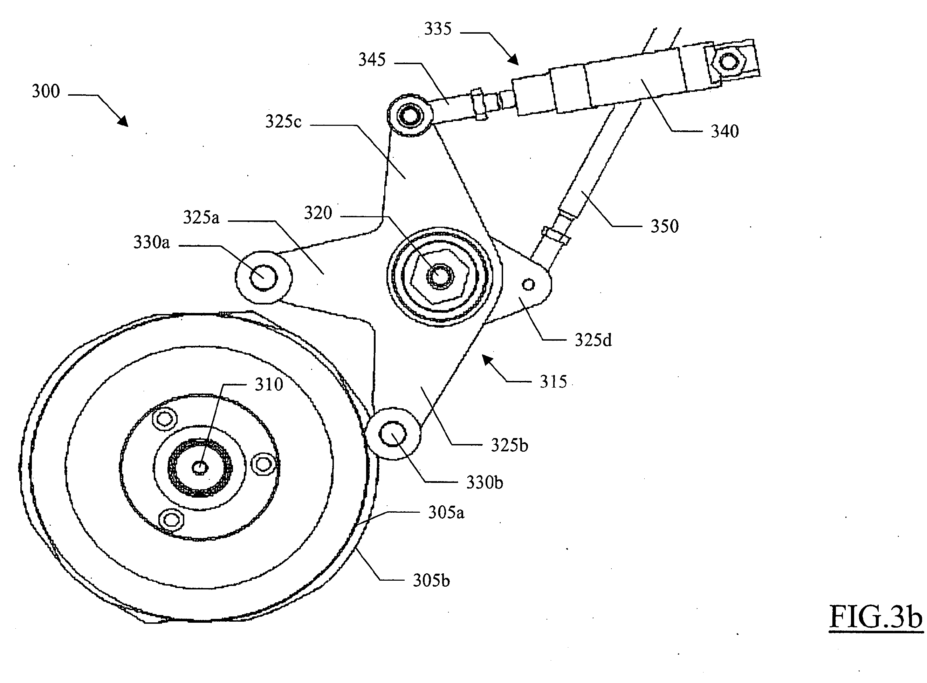

Conversely, as shown in Figure 3b, when the stem 345 is retracted in the cylinder 340 the piston 335 applies a force having an opposed direction to the follower 315, so as to bias it clockwise. As a consequence, the roller 330b is now pushed against the cam 305b so as to interfere with its active surface; therefore, the follower 315 is caused to follow the motion law corresponding to the cam profile 305b (thereby driving the corresponding member in a different working mode). At the same time, the roller 330a is moved away from the cam 305a (so that the roller 330a is decoupled from its active surface); therefore, the roller 330a does not interfere with the motion of the follower 315.

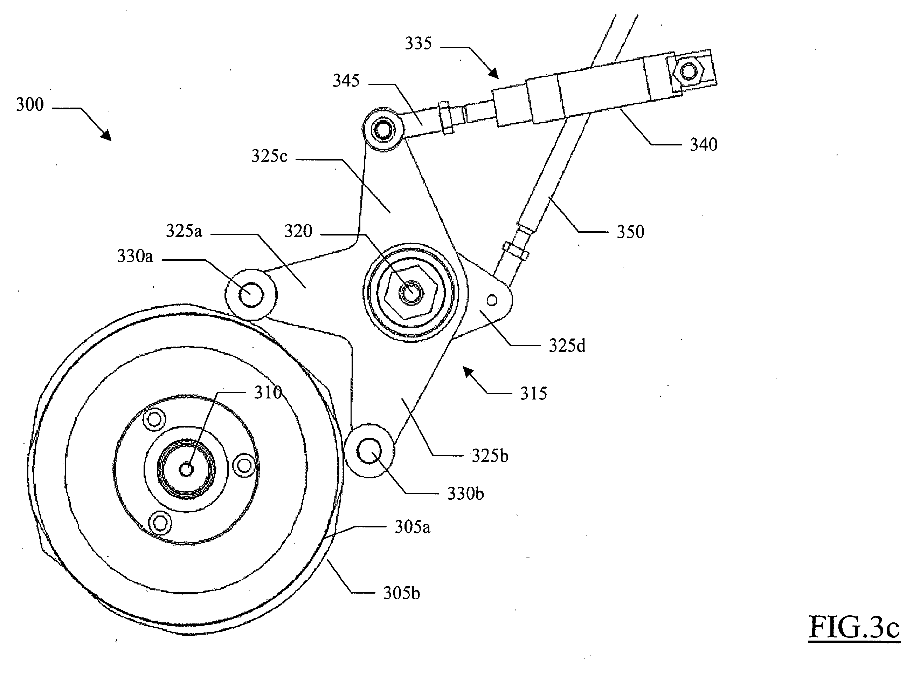

Moving now to Figure 3c, the cam profiles 305a and 305b have a matching section corresponding to the coincident portion of their motion laws. In this phase, both the rollers 330a and 330b are in contact with the active surfaces of the cams 305a and 305b, respectively. When the piston 335 biases the follower 315 counter-clockwise, the roller 330a is pushed against the cam 305a while the roller 330b is unloaded. The cam system 300 switches to the other operative condition by inverting the direction of the force applied by the piston 335 (so as to bias the follower 315 clockwise). In this way, the roller 330b is now pushed against the cam 305b, while the roller 330a is unloaded.

Therefore, the switching between the different operative conditions of the cam system 300 is achieved virtually without any motion of the follower 315 (with only the direction of the force applied to it that changes); this prevents any rebound that would cause a discontinuity in the motion law of the follower 315. Moreover, the piston 335 does not perform any work to move mass during the switching operation; as a consequence, the switching between the different operative conditions of the cam system 300 may be very fast and accurate.

The use of the piston 335 further simplifies the switching operation. Indeed, the force applied by the piston 335 to the follower 315 depends on the amount of pressurized air that is supplied to the cylinder 340 (which pressurized air defines the position of the stem 345); therefore, the direction of this force can be inverted by simply acting on a pneumatic system that controls the piston 335 (not shown the figure). Preferably, the piston 335 includes a spring (or any equivalent resilient means) that biases the stem 345 in a predefined direction (for example, to retract it); the stem 345 is then biased in the other direction (for example, to extract it) by supplying pressurized air to the cylinder 340 (with the pressurized air that moves the stem 345 in opposition to the spring). In this way, the piston 335 can bias the follower 315 in one direction even in case of failure of the pneumatic system (so as to allow the cam system 300 always to work in the corresponding operative condition). As a further improvement, the pressurized air supplied to the cylinder 340 (in the different operative conditions of the cam system 300) causes the stem 345 to be extracted or retracted without reaching a corresponding end-of-stroke position. This avoids any shock caused by the stem 345 striking the cylinder 340, thereby strongly increasing a life of the piston 335.

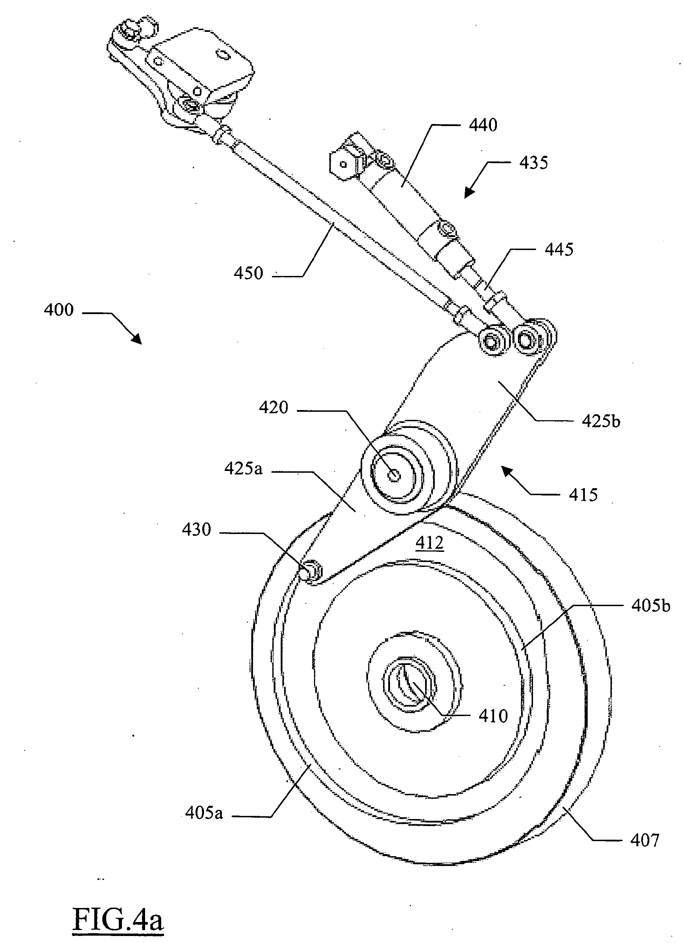

A different implementation of the same solution is illustrated in Figures 4a-4c. Particularly, Figure 4a shows a cam system 400 that may be used to control the rotation of the hook needles.

The cam system 400 again includes two cams 405a and 405b with concentric profiles. However, the cams 405a,450b are now implemented by means of a single disc 407 rotating about a shaft 410. For this purpose, an annular groove 412 is formed on a front surface of the disc 407; the groove 412 has an (outer) lateral surface facing inwardly that defines the cam profile 405a and an (inner) lateral surface facing outwardly that defines the cam profile 405b.

The cam system 400 further includes a follower 415, which again consists of a lever pivoting about a pin 420 defining its fulcrum. The follower 415 is now bar-like shaped with two opposed arms 425a and 425b extending (from the pin 425) towards the disc 407 and away from it, respectively. The arm 425a ends with a roller 430, which is arranged inside the groove 412 to cooperate with the cams 405a and 405b. As above, a pneumatic piston 435 (with a cylinder 440 fastened to the frame of the sewing machine and a sliding stem 445 hinged to a free end of the arm 425b) is used to bias the follower 415, and a tie rod mechanism 450 (coupled with the free end of the arm 425b) is used to drive the corresponding member.

In the operative condition of the cam system 400 shown in the figure, the stem 445 is extracted from the cylinder 440. In this way, the piston 435 applies a force to the follower 415 that biases it clockwise. As a consequence, the roller 430 is pushed against the cam 405a so as to interfere with its active surface; therefore, the follower 415 is caused to follow the motion law corresponding to the cam profile 405a.

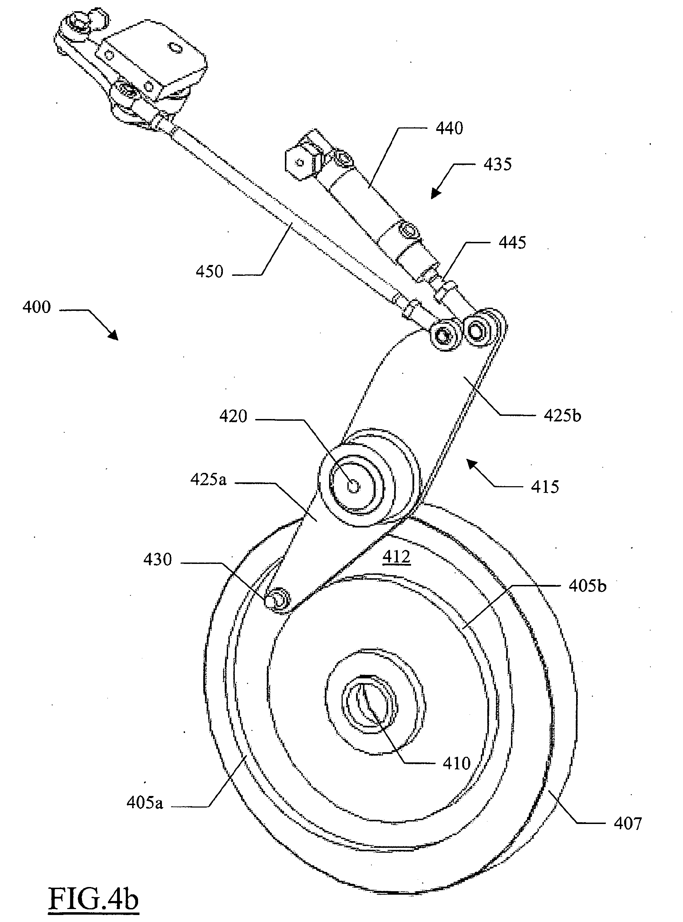

Conversely, as shown in Figure 4b, when the stem 445 is retracted in the cylinder 440 the piston 435 applies a force having an opposed direction to the follower 415, so as to bias it counter-clockwise. As a consequence, the roller 430 is now pushed against the cam 405b so as to interfere with its active surface; therefore, the follower 415 is caused to follow the motion law corresponding to the cam profile 405b.

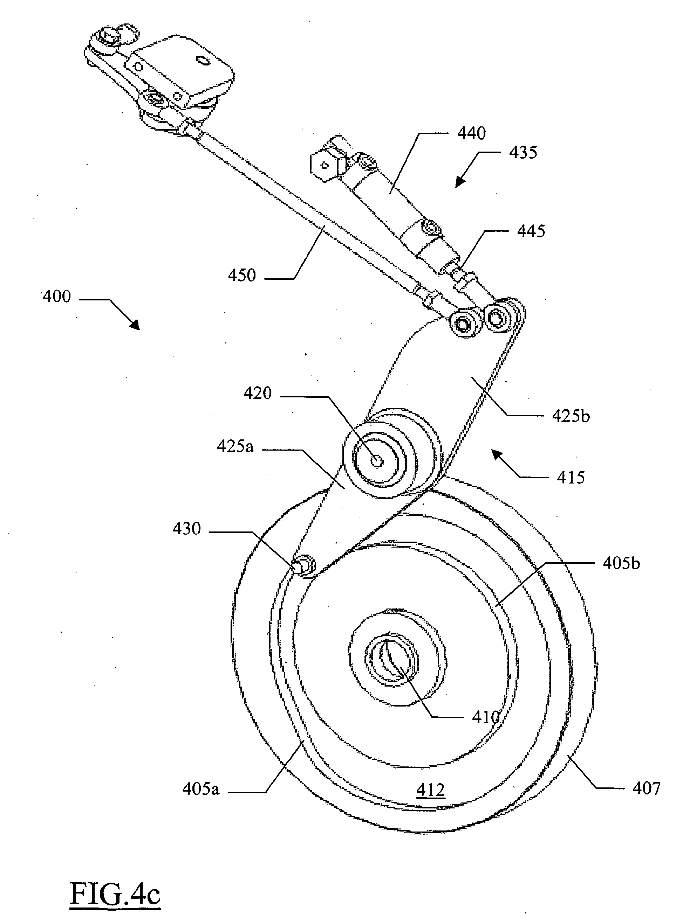

Moving now to Figure 4c, as above the cam profiles 405a and 405b have a matching section corresponding to the coincident portion of their motion laws. In this phase, the roller 430 is in contact with the active surfaces of both the cams 405a and 405b. When the piston 435 biases the follower 415 clockwise, the roller 430 is pushed against the cam 405a (while no pressure is applied between the roller 430 and the cam 405b). The cam system 400 switches to the other operative condition by inverting the direction of the force applied by the piston 435 (so as to bias the follower 415 counter-clockwise). In this way, the roller 430 is now pushed against the cam 405b (while no pressure is applied between the roller 430 and the cam 405a). Therefore, the switching between the different operative conditions of the cam system 400 is again achieved virtually without any motion of the follower 415.

The structure of the proposed cam system may be further simplified when one of its motion laws has a pitch that is always equal to zero (with the follower that is then stationary). In this case, the corresponding cam profile consists of a circle. Therefore, the same result may be achieved by biasing the follower to a fixed position wherein it does not interfere with any cam.

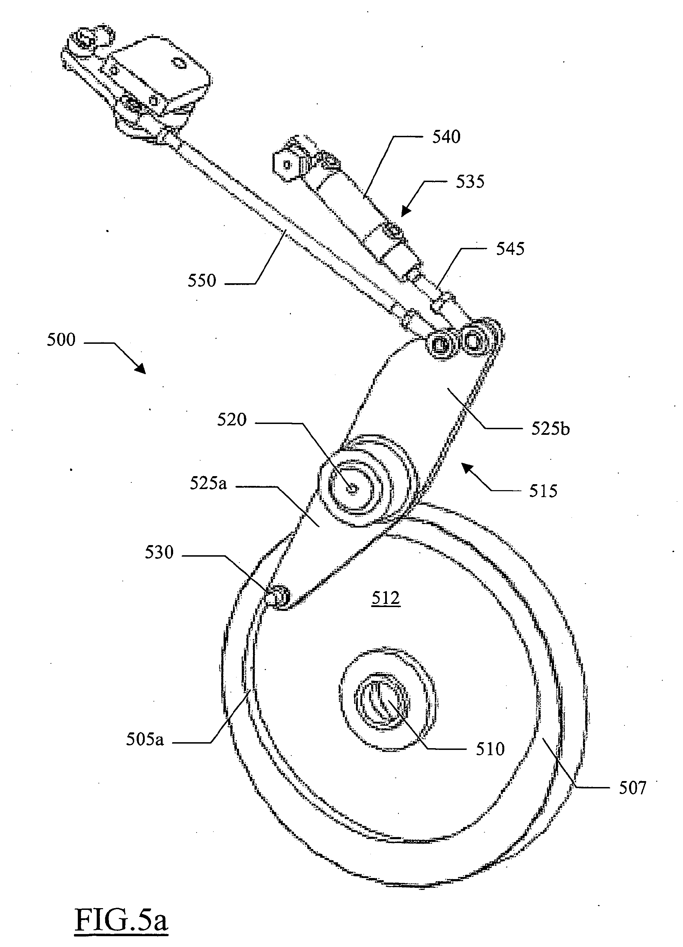

A possible implementation of the above-mentioned embodiment of the invention is illustrated in Figures 5a-5b. Particularly, Figure 5a shows a cam system 500 that may be used to control the rotation of the hook needles.

The cam system 500 now includes a single cam 505a, which is implemented by means of a disc 507 rotating about a shaft 510. An annular groove 512 is formed on a front surface of the disc 507; the groove 512 has a lateral surface facing inwardly that defines the profile of the cam 505a.

As above, a follower 515 pivots about a pin 520, with an arm 525a ending with a roller 530 for cooperating with the cam 505a and another opposed arm 525b. Likewise, the cam system 500 includes a pneumatic piston 535 (with a cylinder 540 fastened to the frame of the sewing machine and a sliding stem 545 hinged to a free end of the arm 525b) and a tie rod mechanism 550 (coupled with the same free end of the arm 525b).

In the operative condition of the cam system 500 shown in the figure, the stem 545 is extracted from the cylinder 540. In this way, the piston 535 applies a force to the follower 515 that biases it clockwise. As a consequence, the roller 530 is pushed against the cam 505a so as to interfere with its active surface; therefore, the follower 515 is caused to follow the motion law corresponding to the cam profile 505a.

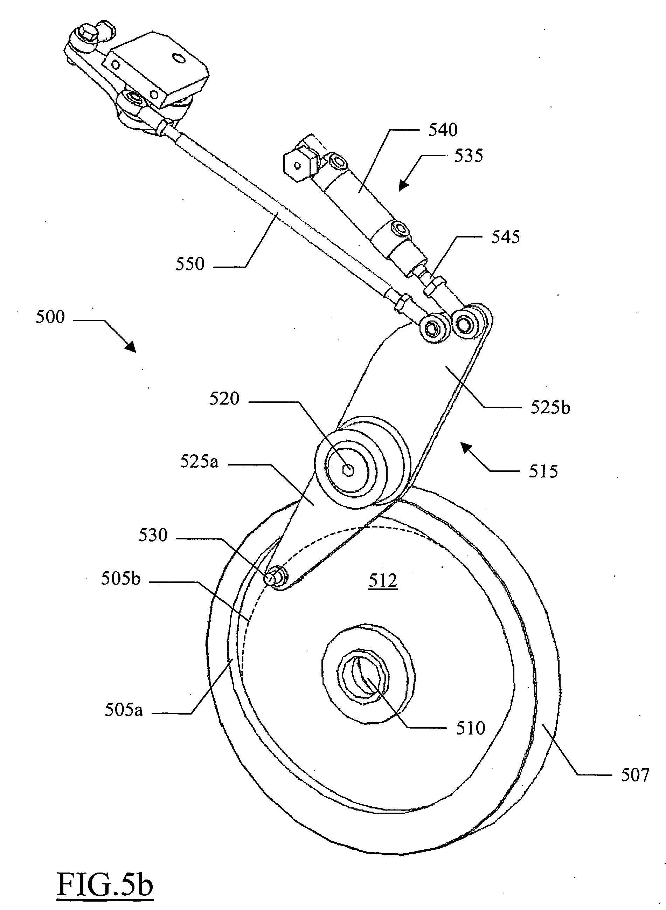

Conversely, as shown in Figure 5b, when the stem 545 is retracted in the cylinder 540 the piston 535 applies a force having an opposed direction to the follower 515, so as to bias it counter-clockwise until an end-of-stroke position of the stem 545 is reached.. As a consequence, the roller 530 does not interfere with the cam 505a so as to be maintained in a fixed position. In other words, the roller 530 is caused to follow a motion law corresponding to the profile of a virtual cam 505b represented by a circle (shown in dashed line in the figure for its section differing from the cam profile 505a).

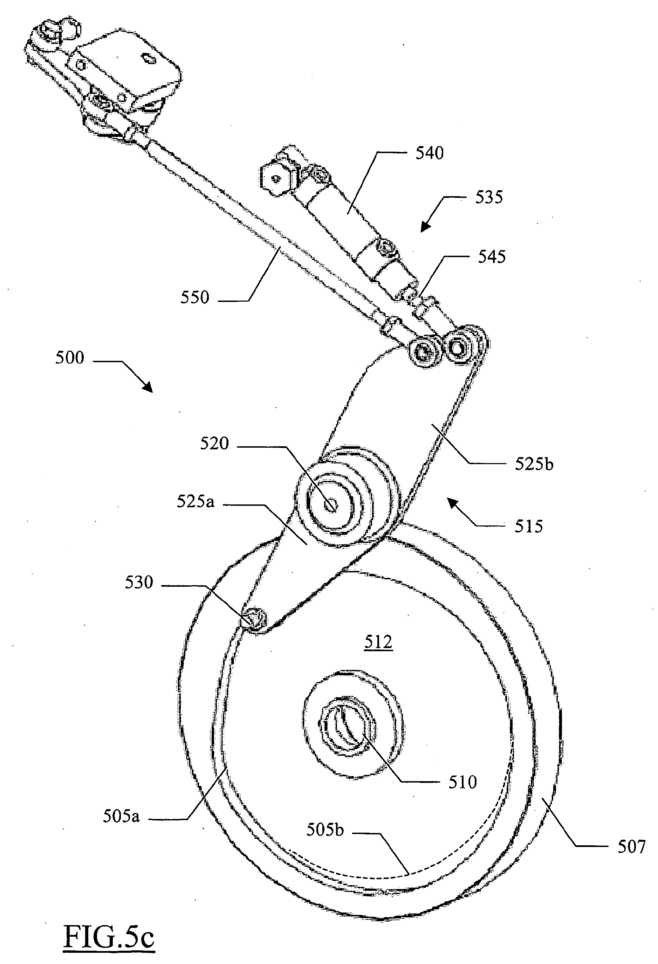

Moving now to Figure 5c, as above the (real) cam profile 505a and the (virtual) cam profile 505b have a matching section corresponding to the coincident portion of their motion laws. In this phase, the roller 530 is in contact with the active surface of the cam 505a while the stem 545 is in its (retracted) end-of-stroke position. When the piston 535 biases the follower 515 clockwise, the roller 530 is pushed against the cam 505a. The cam system 500 switches to the other operative condition by inverting the direction of the force applied by the piston 535 (so as to bias the follower 515 counter-clockwise). In this way, the roller 530 is now pushed away from the cam 505a (however remaining in contact with it). Therefore, the switching between the different operative conditions of the cam system 500 is again achieved virtually without any motion of the follower 515.

As pointed out above, the stem 545 should reach its end-of-stroke position to maintain the follower correctly stationary. However, it is possible to stop the stem 545 (in the desired position corresponding to the cam profile 505b) before reaching the end-of-stroke position; for example, this result may be achieved by means of an external abutment for the follower 515 (not shown in the figure). As above, this avoids any shock caused by the stem 545 striking the cylinder 540 (thereby strongly increasing a life of the piston 535).

This embodiment of the invention relaxes the accuracy requirements in the design of the cams, which should be perfectly (partially) matching to ensure the correct switching between the different operative conditions of the cam system without any motion of the follower. The proposed solution is particularly advantageous when the cam system 500 normally follows the motion law defined by the cam 505a (for example, for the hook needles during the sewing cycles); in this case, the motion of the follower 515 is accurately defined by the real cam 505a - preferably, with the roller 530 that is biased against it by a spring of the piston 535 without any active action (for supplying the pressurized air). The piston 535 then intervenes only seldom during the separation cycles (to cause the follower 515 to trace the motion law defined by the virtual cam 505b).

Naturally, in order to satisfy local and specific requirements, a person skilled in the art may apply to the solution described above many modifications and alterations. More specifically, although the present invention has been described with a certain degree of particularity with reference to preferred embodiment(s) thereof, it should be understood that various omissions, substitutions and changes in the form and details as well as other embodiments are possible. Particularly, the proposed solution may even be practiced without the specific details (such as the numerical examples) set forth in the preceding description to provide a more thorough understanding thereof; conversely, well-known features may have been omitted or simplified in order not to obscure the description with unnecessary particulars. Moreover, it is expressly intended that specific elements and/or method steps described in connection with any disclosed embodiment of the invention may be incorporated in any other embodiment as a matter of general design choice.

For example, similar considerations apply if the cam system has a different structure or includes equivalent components. Particularly, the motion laws described above are merely illustrative and they must not be interpreted in a limitative manner. Accordingly, the cams may have different profiles (corresponding to the desired motions laws); likewise, the follower may be implemented with a lever having any other shape, or even with a tappet. It should be readily apparent that the cam system may be switched between its different operative conditions under the control of any other means (for example, a software program, a hardware device, a mechanical command, and the like).

Without departing from the principles of the invention, it is possible to switch the direction of the force applied to the follower when it is in a different position. For example, the switching operation may terminate even slightly after the follower has left the matching section of the different cam profiles (provided that the direction of the force applied to it by the piston has already changed); indeed, this (reduced) force is in any case capable of biasing the follower in the correct direction towards the desired cam.

Alternatively, the piston may be controlled in both directions (to extract and to retract the stem) by means of the pressurized air (without any internal spring), or it may be implemented with a one-way piston and an external spring. Although it is preferable to extract and retract the stem without reaching the corresponding end-of-stroke positions, nothing prevents having the stem reaching one or both of them. In any case, the proposed solution lends itself to the implemented with equivalent means for biasing the follower in two generic directions different from each other (such as of the mechanical type, magnetic type, and the like); moreover, it is expressly intended that two independent elements may be provided for biasing the follower in the different directions.

With reference in particular to the embodiment based on the follower with two rollers, it is possible to have reversed cam profiles defined by corresponding lateral surfaces of groves both facing inwardly. Moreover, the rollers may be replaced with any equivalent contact elements (such as knife-shaped, plate-shaped, or spherical elements).

Nothing prevents having the arms of the follower with the two rollers that are not symmetric (provided that they are arranged at opposite sides of the line passing through the center of the cams and the fulcrum of the follower).

Similar considerations apply to the embodiment based on the follower with the single roller (which may be replaced with any equivalent contact element).

In any case, the above-described structures of the cam system are not comprehensive; for example, it is possible to use non-concentric discs, tracks for the roller(s) formed in a different way, and the like.

It should be readily apparent that the virtual cam profile (defined by the piston that maintains the follower stationary) may be combined with any other real cam profile (for example, defined by the lateral surface of a disc).

The above-described bookbinding sewing machine is merely illustrative and it must not be interpreted in a limitative manner (with the same solution that may be applied to any other sewing machine having a different structure or including equivalent components). In any case, each one of the proposed cam systems (in any number, down to a single one) lends itself to be used to drive one or more different members of the sewing machine (even in other operative conditions); for example, the same solution may be applied to actuate cutters of the active type (for example, as described in EP-A-1518714), a heating plate for melting the cut threads and stitch them onto the corresponding block of signatures, and the like.

Moreover, it is possible to implement the proposed solution with an equivalent method (by using similar steps, removing some steps non-essential steps, or adding further optional steps - even in a different order).

## Claims

1. A cam system (300;400,500) for use in a bookbinding sewing machine (100), the cam system including a follower (315;415;515) for driving at least one member (120-135) of the sewing machine, and control means (305a,305b,335;405a,405b,435;505a,535) for selectively causing the follower to follow a first motion law or a second motion law, the follower driving the at least one member in a first mode or in a second mode when following the first motion law or the second motion law, respectively, wherein the control means includes a first cam (305a;405a;505a) and first biasing means (335;435;535) for biasing the follower in a first direction to couple the follower with the first cam, the follower when coupled with the first cam following the first motion law,
**characterized in that**
the control means further includes second biasing means (335;435;535) for biasing the follower in a second direction to decouple the follower from the first cam, the follower when decoupled from the first cam following the second motion law, and switching means (140) for selectively enabling one of the first biasing means and the second biasing means,

2. The cam system (300;400;500) according to claim 1, wherein the first motion law and the second motion law include a matching section, the switching means (140) being adapted to switch the enabled biasing means (335,435,535) when the follower substantially follows the matching section.

3. The cam system (300;400;500) according to claim 1 or 2, wherein the control means (305a,305b,335;405a,405b,435;505a,535) includes a piston (335;435;535) having a sliding stem (345;445;545) for implementing the first biasing means and the second biasing means, the stem being brought towards an extracted position when the first biasing means is enabled to apply a first force to the follower (315;415;515) and being brought towards a retracted position when the second biasing means is enabled to apply a second force opposed to the first force to the follower.

4. The cam system (300;400) according to any claim from 1 to 3, wherein the control means (305a,305b,335;405a,405b,435) further includes a second cam (305b;405b), the second biasing means (335;435) being adapted to couple the follower (315;415) with the second cam to cause the follower to follow the second motion law.

5. The cam system (300) according to claim 4, wherein the first cam (305a) includes a first active surface defining a first profile of the first cam and wherein the second cam (305b) includes a second active surface defining a second profile of the second cam, both the first active surface and the second active surface facing inwardly or outwardly, and wherein the follower (315) includes a first contact element (330a) and a second contact element (330b) for interacting with the first active surface and the second active surface, respectively, the first biasing means (335) being adapted to bias the first contact element towards the first active surface and the second contact element away from the second active surface, and the second biasing means (335) being adapted to bias the second contact element towards the second active surface and the first contact element away from the first active surface.

6. The cam system (300) according to claim 5, wherein the first cam (305a) and the second cam (305b) are adapted to rotate about a common cam center (310), and wherein the follower (315) includes a lever being adapted to pivot about a lever fulcrum (320), the first contact element (330a) and the second contact element (330b) being arranged at opposite sides of a line passing through the cam center and the lever fulcrum.

7. The cam system (400) according to claim 4, wherein the first cam (405a) includes a first active surface defining a first profile of the first cam and wherein the second cam (405b) includes a second active surface defining a second profile of the second cam arranged partially inside the first profile, the first active surface facing inwardly and the second active surface facing outwardly, and wherein the follower (415) includes a single contact element (430) for interacting with the first active surface and the second active surface, the first biasing means (435) being adapted to bias the contact element towards the first active surface and away from the second active surface, and the second biasing means (435) being adapted to bias the contact element towards the second active surface and away from the first active surface.

8. The cam system (500) according to any claim from 1 to 3, wherein the second biasing means (535) is adapted to maintain the follower substantially stationary.

9. A bookbinding sewing machine (100) including a set of members (115-135) for sewing blocks of signatures (105) and a set of cam systems (300;400;500) each one according to any claim from 1 to 8 for driving at least one of the members.

10. A sewing method for use in a bookbinding sewing machine (100), the sewing method including the steps of:
driving at least one member (120-135) of the sewing machine by means of a follower (315;415;515) of a cam system (300;400,500),
controlling the cam system to selectively cause the follower to follow a first motion law or a second motion law, the follower driving the at least one member in a first mode or in a second mode when following the first motion law or the second motion law, respectively,
wherein the step of controlling includes:
biasing the follower in a first direction to couple the follower with a first cam (305a;405a;505a), the follower when coupled with the first cam following the first motion law,
**characterized in that**
the step of controlling further includes:
biasing the follower in a second direction to decouple the follower from the first cam, the follower when decoupled from the first cam following the second motion law, and
selectively enabling one of the first biasing means and the second biasing means.

## Patentansprüche

1. Nockensystem (300; 400, 500) zur Verwendung bei einer Buchbinde-Heftmaschine (100), wobei das Nockensystem einen Folger (315; 415; 515) zum Antreiben von wenigstens einem Element (120-135) der Heftmaschine sowie eine Steuereinrichtung (305a, 305b, 335; 405a, 405b, 435; 505a, 535) aufweist, um den Folger selektiv zu veranlassen, einem ersten Bewegungsgesetz oder einem zweiten Bewegungsgesetz zu folgen, wobei der Folger das mindestens eine Element in einem ersten Modus oder in einem zweiten Modus antreibt, wenn er dem ersten Bewegungsgesetz bzw. dem zweiten Bewegungsgesetz folgt, wobei die Steuereinrichtung ein erstes Nockenelement (305a; 405a; 505a) und eine erste Vorspanneinrichtung (335; 435; 535) aufweist, um den Folger in einer ersten Richtung vorzuspannen und **dadurch** den Folger mit dem ersten Nockenelement zu koppeln, wobei der Folger in dem mit dem ersten Nockenelement gekoppelten Zustand dem ersten Bewegungsgesetz folgt,
**dadurch gekennzeichnet, dass** die Steuereinrichtung ferner eine zweite Vorspanneinrichtung (335; 435; 535) aufweist, um den Folger in einer zweiten Richtung vorzuspannen und **dadurch** den Folger von dem ersten Nockenelement zu entkoppeln, wobei der Folger in dem von dem ersten Nockenelement entkoppelten Zustand dem zweiten Bewegungsgesetz folgt, sowie eine Umschalteinrichtung (140) aufweist, um selektiv eine von der ersten Vorspanneinrichtung und der zweiten Vorspanneinrichtung zu aktivieren.

2. Nockensystem (300; 400; 500) nach Anspruch 1,
wobei das erste Bewegungsgesetz und das zweite Bewegungsgesetz einen Übereinstimmungsbereich beinhalten, wobei die Umschalteinrichtung (140) dazu ausgebildet ist, die aktivierte Vorspanneinrichtung (335, 435, 535) umzuschalten, wenn der Folger im Wesentlichen dem Übereinstimmungsbereich folgt.

3. Nockensystem (300; 400; 500) nach Anspruch 1 oder 2,
wobei die Steuereinrichtung (305a, 305b, 335; 405a, 405b, 435; 505a, 535) einen Kolben (335; 435; 535) mit einem Gleüschaft (345; 445; 545) zum Implementieren der ersten Vorspanneinrichtung und der zweiten Vorspanneinrichtung aufweist, wobei der Schaft in eine ausgefahrene Position verbracht wird, wenn die erste Vorspanneinrichtung aktiviert wird, um eine erste Kraft auf den Folger (315; 415; 515) aufzubringen, und in Richtung auf eine zurückgezogene Position verbracht wird, wenn die zweite Vorspanneinrichtung aktiviert wird, um eine der ersten Kraft entgegengesetzte, zweite Kraft auf den Folger aufzubringen.

4. Nockensystem (300; 400) nach einem der Ansprüche 1 bis 3,
wobei die Steuereinrichtung (305a, 305b, 335; 405a, 405b, 435) ferner ein zweites Nockenelement (305b; 405b) aufweist, wobei die zweite Vorspanneinrichtung (335; 435) dazu ausgebildet ist, den Folger (315; 415) mit dem zweiten Nockenelement zu koppeln, um den Folger zu veranlassen, dem zweiten Bewegungsgesetz zu folgen.

5. Nockensystem (300) nach Anspruch 4,
wobei das erste Nockenelement (305a) eine erste aktive Oberfläche aufweist, die ein erstes Profil des ersten Nockenelements bildet, und wobei das zweite Nockenelement (305b) eine zweite aktive Oberfläche aufweist, die ein zweites Profil des zweiten Nockenelements bildet, wobei sowohl die erste aktive Oberfläche als auch die zweite aktive Oberfläche nach innen order nach aui'3en weisen, und wobei der Folger (315) ein erstes Kontaktelement (330a) und ein zweites Kontaktelement (330b) für die Wechselwirkung mit der ersten aktiven Oberfläche bzw. der zweiten aktiven Oberfläche aufweist,
wobei die erste Vorspanneinrichtung (335) dazu ausgebildet ist, das erste Kontaktelement in Richtung auf die erste aktive Oberfläche vorzuspannen sowie das zweite Kontaktelement in Richtung von der zweiten aktiven Oberfläche weg vorzuspannen, und wobei die zweite Vorspanneinrichtung (335) dazu ausgebildet ist, das zweite Kontaktelement in Richtung auf die zweite aktive Oberfläche vorzuspannen und das erste Kontaktelement in Richtung von der ersten aktiven Oberfläche weg vorzuspannen.

6. Nockensystem (300) nach Anspruch 5,
wobei das erste Nockenelement (305a) und das zweiten Nockenelement (395b) um ein gemeinsames Nockenzentrum (310) drehbar sind, und wobei der Folger einen Hebel aufweist, der um einen Hebelschwenkpunkt (320) schwenkbar ist, wobei das erste Kontaktelement (330a) und das zweite Kontaktelement (330b) auf gegenüberliegenden Seiten einer Linie angeordnet sind, die durch das Nockenzentrum und den Hebelschwenkpunkt hindurchgeht.

7. Nockensystem (400) nach Anspruch 4,
wobei das erste Nockenelement (405a) eine erste aktive Oberfläche aufweist, die ein erstes Profil des ersten Nockenelements bildet, und wobei das zweite Nockenelement (405b) eine zweite aktive Oberfläche aufweist, die ein zweites Profil des zweiten Nockenelements bildet, das teilweise innerhalb des ersten Profils angeordnet ist, wobei die erste aktive Oberfläche nach innen weist und die zweite aktive Oberfläche nach außen weist und
wobei der Folger (415) ein einzelnes Kontaktelement (430) für die Wechselwirkung mit der ersten aktiven Oberfläche und der zweiten aktiven Oberfläche aufweist, wobei die erste Vorspanneinrichtung (435) dazu ausgebildet ist, das Kontaktelement in Richtung auf die erste aktive Oberfläche sowie in Richtung von der zweiten aktiven Oberfläche weg vorzuspannen, und wobei die zweite Vorspanneinrichtung (435) dazu ausgebildet ist, das Kontaktelement in Richtung auf die zweite aktive Oberfläche und in Richtung von der ersten aktiven Oberfläche weg vorzuspannen.

8. Nockensystem (500) nach einem der Ansprüche 1 bis 3,
wobei die zweite Vorspanneinrichtung (535) dazu ausgebildet ist, den Folger im Wesentlichen stationär zu halten.

9. Buchbinde-Heftmaschine (100) mit einem Satz von Elementen (115-135) zum Heften von Blöcken von Druckbögen (105) und mit einem Satz von Nockensystemen (300; 400; 500) jeweils nach einem der Ansprüche 1 bis 8 zum Antreiben von mindestens einem der Elemente.

10. Heftverfahren zur Verwendung bei einer Buchbinde-Heftmaschine (100), wobei das Verfahren folgende Schritte aufweist:
Antreiben von mindestens einem Element (120-135) der Heftmaschine mittels eines Folgers (315; 415; 515) eines Nockensystems (300; 400, 500),
Steuern des Nockensystems, um den Folger selektiv zu veranlassen, einem ersten Bewegungsgesetz oder einem zweiten Bewegungsgesetz zu folgen,
wobei der Folger das mindestens eine Element in einem ersten Modus oder in einem zweiten Modus antreibt, wenn dieser dem ersten Bewegungsgesetz bzw. dem zweiten Bewegungsgesetz folgt, wobei der Steuerschritt Folgendes beinhaltet:
Vorspannen des Folgers in einer ersten Richtung, um den Folger mit einem ersten Nockenelement (305a; 405a; 505a) zu koppeln, wobei der Folger in dem mit dem ersten Nockenelement gekoppelten Zustand dem ersten Bewegungsgesetz folgt,
**dadurch gekennzeichnet, dass** der Steuerschritt ferner Folgendes aufweist:
Vorspannen des Folgers in einer zweiten Richtung, um den Folger von dem ersten Nockenelement zu entkoppeln, wobei der Folger in dem von dem ersten Nockenelement entkoppelten Zustand dem zweiten Bewegungsgesetz folgt, und
selektives Aktivieren von einer von der ersten Vorspanneinrichtung und der zweiten Vorspanneinrichtung.

## Revendications

1. Un système de came (300;400,500) pour l'usage dans une machine à coudre de reliure (100), le système de came comprenant un suiveur (315;415;515) pour conduire au moins un membre (120-135) de la machine à coudre, et des moyens de commande (305a,305b,335;405a,405b,435;505a,535) pour faire suivre sélectivement le suiveur une première loi de mouvement ou une deuxième loi de mouvement, le suiveur conduisant l'au moins un membre dans un premier mode ou dans un deuxième mode en suivant la première loi de mouvement ou la deuxième loi de mouvement, respectivement, dans lequel le moyen de commande comprend une première came (305a;405a;505a) et des premiers moyens de polarisation (335;435;535) pour polariser le suiveur dans une première direction pour coupler le suiveur avec la première came, le suiveur quand couplé avec la première came suivant la première loi de mouvement,
**caractérisé en ce que**
les moyens de commande ultérieurement comprennent des deuxièmes moyens de polarisation (335;435;535) pour polariser le suiveur dans une deuxième direction pour découpler le suiveur de la première came, le suiveur quand découplé de la première came suivant la deuxième loi de mouvement, et des moyens de commutation (140) pour activer sélectivement un des premiers moyens de polarisation et des deuxièmes moyens de polarisation.

2. Le système de came (300;400;500) selon la revendication 1, dans lequel la première loi de mouvement et la deuxième loi de mouvement comprenant une section concordante, les moyens de commutation (140) étant adaptés à commuter les moyens de polarisation activés (335,435,535) quand le suiveur suit essentiellement la section concordante.

3. Le système de came (300;400;500) selon la revendication 1 ou 2, dans lequel les moyens de commande (305a,305b,335;405a,405b,435;505a,535) comprennent un piston (335;435;535) ayant une tige coulissante (345;445;545) pour mettre en oeuvre les premiers moyens de polarisation et les deuxièmes moyens de polarisation, la tige étant apportée vers une position extraite quand les premiers moyens de polarisation sont activés pour appliquer une première force au suiveur (315;415;515) et étant apportée vers une position rétractée quand les deuxièmes moyens de polarisation sont activés pour appliquer une deuxième force opposée à la première force au suiveur.

4. Le système de came (300;400) selon chaque revendication de 1 à 3, dans lequel les moyens de commande (305a,305b,335;405a,405b,435) ultérieurement comprennent une deuxième came (305b;405b), les deuxièmes moyens de polarisation (335;435) étant adaptés à coupler le suiveur (315;415) avec la deuxième came pour faire suivre le suiveur la deuxième loi de mouvement.

5. Le système de came (300) selon la revendication 4, dans lequel la première came (305a) comprend une première surface active définissant un premier profil de la première came et dans lequel la deuxième came (305b) comprend une deuxième surface active définissant un deuxième profil de la deuxième came, tous les deux la première surface active et la deuxième surface active s'étendent intérieurement ou extérieurement, et dans lequel le suiveur (315) comprend un premier élément de contact (330a) et un deuxième élément de contact (330b) pour interagir avec la première surface active et la deuxième surface active, respectivement, les premiers moyens de polarisation (335) étant adaptés à polariser le premier élément de contact vers la première surface active et le deuxième élément de contact loin de la deuxième surface active, et les deuxièmes moyens de polarisation (335) étant adaptés à polariser le deuxième élément de contact vers la deuxième surface active et le premier élément de contact loin de la première surface active.

6. Le système de came (300) selon la revendication 5, dans lequel la première came (305a) et la deuxième came (305b) sont adaptées à tourner autour d'un centre de came commun (310), et dans lequel le suiveur (315) comprend un levier étant adapté à pivoter autour d'un point d'appui du levier (320), le premier élément de contact (330a) et le deuxième élément de contact (330b) étant arrangés sur des côtés opposés d'une ligne passant par le centre de came et le point d'appui du levier.

7. Le système de came (400) selon la revendication 4, dans lequel la première came (405 a) comprend une première surface active définissant un premier profil de la première came et dans lequel la deuxième came (405b) comprend une deuxième surface active définissant un deuxième profil de la deuxième came disposé partiellement à l'intérieur du premier profil, la première surface active s'étendent intérieurement et la deuxième surface active s'étendent extérieurement, et dans lequel le suiveur (415) comprend un élément de contact unique (430) pour interagir avec la première surface active et la deuxième surface active, les premiers moyens de polarisation (435) étant adaptés à polariser l'élément de contact vers la première surface active et loin de la deuxième surface active, et les deuxièmes moyens de polarisation (435) étant adaptés à polariser l'élément de contact vers la deuxième surface active et loin de la première surface active.

8. Le système de came (500) selon chaque revendication de 1 à 3, dans lequel les deuxièmes moyens de polarisation (535) sont adaptés à maintenir le suiveur essentiellement stationnaire.

9. Une machine à coudre de reliure (100) comprenant un ensemble de membres (115-135) pour coudre des blocs de cahiers (105) et un ensemble de systèmes de came (300;400;500) chacun selon chaque revendication de 1 à 8 pour conduire au moins un des membres.

10. Une méthode de couture pour l'usage dans une machine à coudre de reliure (100), la méthode de couture comprenant les étapes de:
conduire au moins un membre (120-135) de la machine à coudre à l'aide d'un suiveur (315;415;515) d'un système de came (300;400,500),
commander le système de came pour faire suivre sélectivement le suiveur une première loi de mouvement ou une deuxième loi de mouvement, le suiveur conduisant l'au moins un membre dans un premier mode ou dans un deuxième mode en suivant la première loi de mouvement ou la deuxième loi de mouvement, respectivement,
dans lequel l'étape de commander comprend de:
polariser le suiveur dans une première direction pour coupler le suiveur avec une première came (305a;405a;505a), le suiveur quand couplé avec la première came suivant la première loi de mouvement,
**caractérisé en ce que**
l'étape de commander ultérieurement comprend de:
polariser le suiveur dans une deuxième direction pour découpler le suiveur de la première came, le suiveur quand découplé de la première came suivant la deuxième loi de mouvement, et
activer sélectivement un des premiers moyens de polarisation et des deuxièmes moyens de polarisation.
